# EUROPÄISCHE PATENTSCHRIFT

(11) **EP 2 211 205 B1**
(45) Veröffentlichungstag und Bekanntmachung des Hinweises auf die Patenterteilung: **30.11.2016**
(21) Anmeldenummer: 09015762.9
(22) Anmeldetag: 19.12.2009
(51) Int. Cl.: G01V 8/10, G01S 17/02

(54) **Verfahren zur Erfassung von Objekten in einem Überwachungsbereich und optischer Sensor zur Durchführung des Verfahrens**
Method for detecting objects in a surveillance area and optical sensor for carrying out the method
Procédé de détection d'objets dans une zone de surveillance et capteur optique destiné à l'exécution du procédé

(30) Priorität: 23.01.2009 DE 102009005991
(43) Veröffentlichungstag der Anmeldung: 28.07.2010
(73) Patentinhaber: Leuze electronic GmbH + Co. KG, 73277 Owen/Teck (DE)
(72) Erfinder: Karaduman, Metin, 73278 Schlierbach (DE); Haag, Roland, 73278 Schlierbach (DE)
(74) Vertreter: Ruckh, Rainer Gerhard

(56) Entgegenhaltungen:
- EP-A1- 1 624 322
- DE-B3- 10 348 104
- US-A- 4 464 048
- US-A1- 2001 020 863

## Beschreibung

Die Erfindung betrifft ein Verfahren zur Erfassung von Objekten in einem Überwachungsbereich sowie einen optischen Sensor zur Durchführung des Verfahrens.

Optische Sensoren der in Rede stehenden Art weisen generell einen Sendelichtstrahlen emittierenden Sender, einen Empfangslichtstrahlen empfangenden Empfänger und eine Auswerteeinheit, in welcher in Abhängigkeit der Empfangssignale des Empfängers ein Objektfeststellungssignal generiert wird, auf. Der Empfänger des optischen Sensors ist dabei von einer Avalanche-Photodiode gebildet. Derartige optische Sensoren können insbesondere als Distanzsensoren ausgebildet sein, wobei mit diesen Distanzen von Objekten nach einem Lichtlaufzeitverfahren bestimmt werden.

Die den Empfänger bildende Avalanche-Photodiode wird dabei zur Durchführung der Distanzmessungen mit einer festen, das heißt konstanten Vorspannung betrieben, die unterhalb der Durchbruchspannung liegt, so dass bei diesen Messungen kein Durchbruch der Avalanche-Photodiode erfolgt. Die Durchbruchspannung ist jedoch stark temperaturabhängig. Zudem können Rauschspitzen, die durch Fremdlichteinstrahlung, Umgebungslicht oder weitere Störeinflüsse entstehen, Durchbrüche der Avalanche-Photodiode verursachen. Daher muß der Wert der Vorspannung weit unterhalb der Durchbruchspannung der Avalanche-Photodiode gewählt werden, damit gewährleistet ist, dass diese auch bei auftretenden Temperaturschwankungen oder Rauschspitzen stets unterhalb der Durchbruchspannung liegt, so dass über die gesamte Betriebszeit des optischen Sensors Durchbrüche der Avalanche-Photodiode vermieden werden. Nachteilig hierbei ist, dass durch den niedrigen, weit unterhalb der Durchbruchspannung liegenden Wert der fest voreingestellten Vorspannung der Avalanche-Photodiode deren Verstärkungsfaktor sehr gering ist. Dies wiederum bedeutet, dass die Distanzmessung auf unerwünscht kleine Objektdistanzen begrenzt ist, da bei großen Objektdistanzen die vom Objekt auf die Avalanche-Photodiode geführten Empfangslichtstrahlen nur noch kleine Empfangssignale als Ausgangssignale der Avalanche-Photodiode liefern, die keine zuverlässige Distanzmessung mehr zulassen. Insbesondere tritt dann ein erheblicher Schwarz-Weiß-Fehler bei der Distanzmessung auf, das heißt die Distanzmessergebnisse variieren stark in Abhängigkeit der Reflektivitäten der Objektoberflächen.

Die US 4 464 048 A betrifft eine Abstandsermittlungsvorrichtung, welche nach dem Impulslaufzeitverfahren arbeitet. Die Vorrichtung umfasst einen Sendepulse emittierenden, als Laser ausgebildete Sender und einen Empfänger, der als Avalanche-Photodiode ausgebildet ist. Weiterhin ist eine Auswerteeinheit vorgesehen, in der aus der Laufzeit der Sendepuls zu einem Zielobjekt und zurück zum Empfänger die Entfernung des Zielobjekts ermittelt wird. Mit einer Schaltungsanordnung in Form eines Kondensators wird die Durchbruchspannung der Avalanche-Photodiode bestimmt und in Abhängigkeit hiervon deren Vorspannung festgelegt.

Der Erfindung liegt die Aufgabe zugrunde, ein Verfahren und einen optischen Sensor bereitzustellen, bei welchen auch bei Vorhandensein von Störeinflüssen eine sichere und genaue Objektdetektion gewährleistet ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Verfahren dient zur Erfassung von Objekten in einem Überwachungsbereich mittels eines optischen Sensors. Der optische Sensor umfasst einen Sendelichtstrahlen emittierenden Sender, einen Empfangslichtstrahlen empfangenden Empfänger in Form einer Avalanche-Photodiode und eine Auswerteeinheit, in welcher in Abhängigkeit von Empfangssignalen des Empfängers ein Objektfeststellungssignal generiert wird. Weiterhin sind Mittel zur Erfassung der Durchbruchspannung der Avalanche-Photodiode vorgesehen. In Abhängigkeit der ermittelten Durchbruchspannung wird die Vorspannung der Avalanche-Photodiode zur Durchführung der Objekterfassung festgelegt. Zur Ermittlung der Durchbruchspannung der Avalanche-Photodiode deren Vorspannung wird fortlaufend erhöht, bis ein Durchbruch erfolgt. Durch in Reiheschalten eines Widerstandes wird mit der Avalanche-Photodiode verhindert, dass ein dauerhafter Durchbruch erfolgt, sondern nur kurze Stromimpulse generiert werden. Die Anzahl von Stromimpulsen wird innerhalb eines Zeitintervalls T1 als Maß für die Durchbruchspannung ausgewertet.

Der Grundgedanke der Erfindung besteht somit darin, die Durchbruchspannung der Avalanche-Photodiode fortlaufend, das heißt zyklisch oder in bestimmten Zeitintervallen zu bestimmen und daraus die Vorspannung der Avalanche-Photodiode so zu bestimmen, dass einerseits auch bei Vorhandensein von Störeinflüssen Durchbrüche vermieden werden, wobei andererseits die Vorspannung möglichst hoch, das heißt dicht unterhalb der Durchbruchspannung der Avalanche-Photodiode gewählt wird, dass ein möglichst hoher Verstärkungsfaktor der Avalanche-Photodiode erhalten wird, wodurch eine hohe Nachweisempfindlichkeit auch bei der Detektion von Objekten in großen Distanzen erhalten wird. Dies gilt insbesondere für als Distanzsensoren ausgebildete optische Sensoren, wodurch die erfindungsgemäße Nachführung der Vorspannung und die dadurch erhaltenen hohen Verstärkungsfaktoren der Avalanche-Photodiode auch große Objektdistanzen ohne nennenswerten Schwarz-Weiß-Fehler exakt bestimmt werden können.

Da die Durchbruchspannung der Avalanche-Photodiode fortlaufend bestimmt wird, kann durch die aus diesen Werten der Durchbruchspannung abgeleitete aktuelle Vorspannung der Avalanche-Photodiode eine Kompensation von Störeffekten bedingt durch Bauteiltoleranzen, Temperaturdriften der Avalanche-Photodiode oder durch Fremdlichteinstrahlung bedingte Rauschspitzen erfolgen, in dem angepasst an die aktuellen Bedingungen jeweils ein optimierter Wert für die Vorspannung der Avalanche-Photodiode und damit auch für den mit der Avalanche-Photodiode erhaltenen Verstärkungsfaktor erhalten wird.

Erfindungsgemäß wird zur Ermittlung der Durchbruchspannung der Avalanche-Photodiode deren Vorspannung fortlaufend erhöht, bis ein Durchbruch erfolgt, wobei durch in Reiheschalten eines Widerstandes mit der Avalanche-Photodiode verhindert wird, dass ein dauerhafter Durchbruch erfolgt, sondern nur kurze Stromimpulse generiert werden, und dass die Anzahl von Stromimpulsen innerhalb eines Zeitintervalls T1 als Maß für die Durchbruchspannung ausgewertet wird.

Dabei wird der aktuelle Wert der Vorspannung der Avalanche-Photodiode, für welchen vorgegebener Mindestwert an Stromimpulsen innerhalb eines Zeitintervalls T1 registriert wird, als Durchbruchspannung übernommen.

Gemäß einer ersten Variante wird während der gesamten Betriebsdauer die Durchbruchspannung zyklisch ermittelt. Hierzu wird bevorzugt abwechselnd ein Zeitintervall T1 zur Bestimmung der Durchbruchspannung und dann ein Zeitintervall T2 zur Durchführung von Messungen zur Objekterfassung aktiviert.

Die Durchbruchspannung der Avalanche-Photodiode hängt besonders stark von der Umgebungstemperatur ab. Daher wird gemäß einer zweiten Variante mittels eines Temperatursensors die Umgebungstemperatur der Avalanche-Photodiode gemessen und eine Bestimmung der Durchbruchspannung der Avalanche-Photodiode zur Festlegung deren Vorspannung nur dann durchgeführt, wenn sich die Temperatur stark geändert hat.

Generell wird die Vorspannung aus der Durchbruchspannung der Avalanche-Photodiode derart abgeleitet, dass von der aktuell ermittelten Durchbruchspannung ein geeigneter Offset-Wert abgezogen wird. Im einfachsten Fall ist dieser Offset-Wert als fester Parameter im optischen Sensor hinterlegt.

Alternativ oder zusätzlich kann im optischen Sensor ein Zusatz-Sender als künstliche Fremdlichtquelle vorgesehen sein, wobei während der Zeitintervalle T1 mit dem Sender generiertes Licht direkt in die Avalanche-Photodiode eingestrahlt wird, wodurch durch die Fremdlichtquelle die in den Zeitintervall T1 ermittelte Durchbruchspannung um einen Offset verschoben wird.

Die Erfindung wird im Folgenden anhand der Zeichnungen erläutert. Es zeigen:
- Figur 1:: Schematische Darstellung eines optischen Sensors zur Erfassung von Objekten in einem Überwachungsbereich.
- Figur 2:: Diagramm der temperaturabhängigen Verstärkung einer Avalanche-Photodiode, die einen Empfänger des optischen Sensors gemäß Figur 1 bildet.
- Figur 3:: Zeitdiagramm zur Einstellung der Vorspannung der AvalanchePhotodiode gemäß Figur 2.

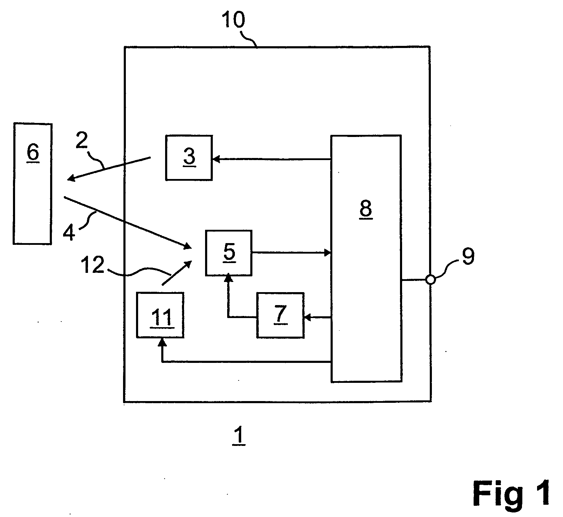

Figur 1 zeigt schematisch den Aufbau eines Distanzsensors als Ausführungsbeispiel des erfindungsgemäßen optischen Sensors 1. Der optische Sensor 1 umfasst einen Sendelichtstrahlen 2 emittierenden Sender 3 und einen Empfangslichtstrahlen 4 empfangenden Empfänger 5 zur Detektion von Objekten 6 in einem Überwachungsbereich. Der Sender 3 ist von einer Laserdiode gebildet. Der Empfänger 5 besteht aus einer Avalanche-Photodiode und einem mit dieser in Reihe geschalteten Widerstand. Zudem ist empfangsseitig, vorzugsweise auf der Elektronikschaltung des Empfängers 5, ein nicht dargestellter Temperatursensor vorgesehen, mittels dessen die Umgebungstemperatur der Avalanche-Photodiode bestimmt werden kann.

Zur Spannungsversorgung der Avalanche-Photodiode ist eine Hochspannungseinheit 7 vorgesehen. Diese wird ebenso wie der Sender 3 von einer Auswerteeinheit 8 gesteuert, die von einem Mikroprozessor oder dergleichen gebildet sein kann. Weiterhin erfolgt in der Auswerteeinheit 8 die Auswertung der vom Empfänger 5 in Abhängigkeit der detektierten Empfangslichtstrahlen 4 generierten Empfangssignale. Aus den Empfangssignalen wird ein Objektfeststellungssignal generiert, welches über einen an die Auswerteeinheit 8 angeschlossenen Ausgang 9 ausgegeben wird. Die genannten Komponenten des optischen Sensors 1 sind in einem Gehäuse 10 integriert. Weiterhin ist innerhalb des Gehäuses 10 des optischen Sensors 1 ein Zusatz-Sender 11 integriert, dessen Lichtstrahlen 12 direkt in die Avalanche-Photodiode eingestrahlt werden können.

Bei dem optischen Sensor 1 gemäß Figur 1 erfolgt die Distanzmessung nach einem Puls-Laufzeit-Verfahren. Hierbei erfolgt die Ansteuerung des Senders 3 so, dass dieser Folgen von kurzen Sendlichtimpulsen emittiert. Zur Distanzbestimmung werden dann die Laufzeiten der Sendelichtimpulse vom Sender 3 zum Objekt 6 und zurück zum Empfänger 5 bestimmt.

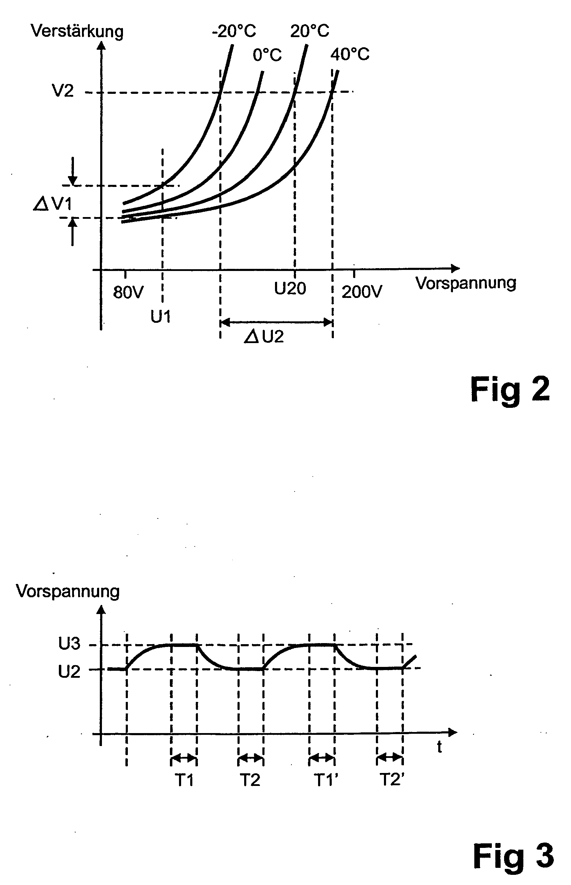

Figur 2 zeigt die Verstärkungs-Kennlinien der den Empfänger 5 des optischen Sensors 1 bildenden Avalanche-Photodiode. Dabei ist in Figur 2 die Verstärkung der Avalanche-Photodiode in Abhängigkeit deren Vorspannung aufgetragen. Figur 2 zeigt dabei vier verschiedene Verstärkungskennlinien für unterschiedliche Temperaturen (-20°C, 0°C, 20°C, 40°C). Wie aus Figur 2 ersichtlich, variiert die Verstärkung stark mit der Umgebungstemperatur. Entsprechend stark variiert die Durchbruchspannung der Avalanche-Photodiode, bei welcher der Lawinendurchbruch der Avalanche-Photodiode erfolgt. Zudem ist die Durchbruchspannung der Avalanche-Photodiode abhängig von Bauteiltoleranzen und Rauschsignalspitzen, die durch Umgebungslicht, insbesondere Fremdlichteinstrahlung verursacht werden.

Bei der Durchführung von Distanzmessungen mit dem optischen Sensor 1 wird die Avalanche-Photodiode so betrieben, dass keine Durchbrüche der Avalanche-Photodiode auftreten. Figur 2 zeigt die hierzu vorgenommene, konstante Einstellung der Vorspannung der Avalanche-Photodiode, wie sie aus dem Stand der Technik vorbekannt ist. Um auch bei Temperaturschwankungen oder Rauschsignalspitzen zu gewährleisten, dass die Vorspannung sicher unterhalb der temperaturabhängigen Durchbruchspannung der Avalanche-Photodiode liegt, muss die Vorspannung weit unterhalb der Durchbruchspannung liegend gewählt werden. In Figur 2 ist der typische Wert einer aus dem Stand der Technik bekannten konstanten Einstellung der Vorspannung mit U1 bezeichnet. Diese weit unterhalb der Durchbruchspannung liegende Vorspannung U1 liegt bei kleineren Spannungswerten (wenig oberhalb von 80V), so dass für diese Vorspannung nur eine geringe Verstärkung erhalten wird. Da die Verstärkung stark temperaturabhängig ist, wird, je nach aktueller Temperatur für die Vorspannung U1 eine Verstärkung im Bereich ΔV1 erhalten.

Erfindungsgemäß wird bei der Avalanche-Photodiode des optischen Sensors 1 die aktuelle Durchbruchspannung fortlaufend bestimmt, das heißt die für die jeweilige Temperatur und die jeweiligen Umgebungsbedingungen ist der aktuelle Wert der Durchbruchspannung bekannt. Daher kann aus der aktuell ermittelten Durchbruchspannung eine an diese optimal angepasste Vorspannung für den Betrieb der Avalanche-Photodiode bestimmt werden. Hierzu wird vorzugsweise die Vorspannung aus der Durchbruchspannung so abgeleitet, dass von der Durchbruchspannung nur ein relativ kleiner Offset-Wert abgezogen wird. Die so bestimmte Vorspannung liegt nur sehr dicht unterhalb der Durchbruchspannung und kann im vorliegenden Fall bis zu 200 V betragen. Da jedoch die Durchbruchspannung aktuell bestimmt wurde, so dass hierin sämtliche Umgebungs- und Störeinflüsse enthalten sind, ist gewährleistet, dass bei einer Vorspannungseinstellung kein Durchbruch der Avalanche-Photodiode auftritt.

Die erfindungsgemäß aus der aktuell bestimmten Durchbruchspannung abgeleitete Vorspannung liegt, wie aus Figur 2 ersichtlich, im Bereich ΔU2. Dabei wird die Vorspannung für die aktuelle Temperatur immer so vorgegeben, dass als Verstärkung der Wert V2 erhalten ist. Liegt beispielsweise die Temperatur bei 20°C, so beträgt der Wert der Vorspannung U20.

Wie aus Figur 2 unmittelbar ersichtlich, kann gegenüber der aus dem Stand der Technik bekannten konstanten Vorgabe der Vorspannung (U1) durch die erfindungsgemäße Ableitung der Vorspannung aus der Durchbruchspannung die Vorspannung (im Bereich ΔU2) sehr viel höher gewählt werden, so dass dementsprechend auch erheblich größere Verstärkungen (V2) erzielt werden. Dies wiederum führt zu einer erhöhten Nachweisempfindlichkeit der Distanzmessung. So kann mit dem erfindungsgemäßen optischen Sensor 1 auch bei großen Objektdistanzen eine genaue Distanzbestimmung durchgeführt werden, wobei für die Distanzmessungen ein sehr kleiner Schwarz-Weiß-Fehler erhalten wird.

Figur 3 zeigt schematisch den Einstellvorgang der Vorspannung der Avalanche-Photodiode und die damit durchgeführten Distanzmessungen.

Bei dem in Figur 3 dargestellten Fall erfolgt zyklisch in einem Zeitintervall T1 eine Messung zur Bestimmung der Durchbruchspannung und dann in einem Zeitintervall T2 eine Distanzmessung zur Objektdetektion.

Generell wird zur Bestimmung der Durchbruchspannung der Avalanche-Photodiode die aktuelle Vorspannung der Avalanche-Photodiode schrittweise erhöht. Bei einem bestimmten Wert der Vorspannung wird dann innerhalb eines Zeitintervalls T1 geprüft, ob die Durchbruchspannung bereits erreicht ist. Ist die Durchbruchspannung noch nicht erreicht, wird im darauffolgenden Zeitintervall T2 die Distanzmessung mit der aktuellen Vorspannung durchgeführt und im nächsten Zeitintervall T1' die Vorspannung wieder um einen kleinen Betrag erhöht.

Wird dagegen innerhalb eines Zeitintervalls T1 registriert, dass die Vorspannung die Durchbruchspannung erreicht hat, so wird für die nachfolgende Prüfung im Zeitintervall T1' die Vorspannung um einen geringen Betrag gesenkt.

Dieser Fall ist in Figur 3 dargestellt. Die aktuelle Vorspannung wird, wie aus Figur 3 ersichtlich, auf einen Wert U3 erhöht bis das Zeitintervall T1 geöffnet wird. In diesem Zeitintervall wird die Vorspannung konstant gehalten. Erfolgt dann ein Durchbruch der Avalanche-Photodiode, so wird durch den in Reihe mit der Avalanche-Photodiode geschalteten Widerstand verhindert, dass ein dauerhafter Durchbruch erfolgt. Anstelle dessen ergibt sich nur ein kurzer Stromimpuls an der Avalanche-Photodiode. Während des Zeitintervalls T1 wird dann die Anzahl der innerhalb von T1 liegenden Stromimpulse gezählt.

Erreicht diese Anzahl einen vorgegebenen Mindestwert, hat die Vorspannung den Wert der Durchbruchspannung erreicht.

Dies ist bei der Ausführungsform in Figur 3 der Fall. Daher wird, wie aus Figur 3 ersichtlich, die am Ende von T1 vorliegende Vorspannung (U3) kontinuierlich bis auf den Wert U2 reduziert. Der Wert U2 entspricht der Differenz der Durchbruchspannung (U3) und eines bestimmten Offset-Werts.

Diese aktuell eingestellte Vorspannung U2 wird dann für die im Zeitintervall T2 durchzuführende Distanzmessung konstant gehalten.

Der Offset-Wert kann als fester Parameterwert in der Auswerteeinheit 8 abgespeichert sein. Besonders vorteilhaft wird der Offset-Wert physikalisch dadurch vorgegeben, dass nur in den Zeitintervallen T1 der Zusatz-Sender 11 aktiviert ist und Lichtstrahlen 12 direkt in die Avalanche-Photodiode einstrahlt. Der Zusatz-Sender 11 wirkt somit als künstliche Fremdlichtquelle und bewirkt somit Rauschspitzen in der Avalanche-Photodiode, die zu einem verfrühten Durchbruch der Avalanche-Photodiode führen. Die bestimmte Durchbruchspannung wird somit zu niedrigeren Werten verschoben.

Bei dem in Figur 3 dargestellten Fall wird die Bestimmung der Durchbruchspannung und die Ableitung der aktuellen Vorspannung aus der Durchbruchspannung fortlaufend zyklisch durchgeführt, das heißt vor jedem Zeitintervall T2, in dem eine Distanzmessung durchgeführt wird, wird innerhalb eines Zeitintervalls T1 eine Messung zur Bestimmung der Durchbruchspannung durchgeführt.

Alternativ kann die Bestimmung der Durchbruchspannung nur dann erfolgen, wenn mit dem Temperatursensor eine signifikante Änderung der Temperatur im Bereich der Avalanche-Photodiode registriert wird. Ist dagegen die Temperatur konstant, wird die Vorspannung der Avalanche-Photodiode unverändert gelassen.

### Bezugszeichenliste

- (1): Optischer Sensor
- (2): Sendelichtstrahlen
- (3): Sender
- (4): Empfangslichtstrahlen
- (5): Empfänger
- (6): Objekt
- (7): Hochspannungseinheit
- (8): Auswerteeinheit
- (9): Ausgang
- (10): Gehäuse
- (11): Zusatz-Sender
- (12): Lichtstrahlen

## Patentansprüche

1. Verfahren zur Erfassung von Objekten (6) in einem Überwachungsbereich mittels eines optischen Sensors (1) umfassend einen Sendelichtstrahlen (2) emittierenden Sender (3), einen Empfangslichtstrahlen (4) empfangenden Empfänger (5) in Form einer Avalanche-Photodiode, und eine Auswerteeinheit, in welcher in Abhängigkeit von Empfangssignalen des Empfängers ein Objektfeststellungssignal generiert wird, wobei Mittel zur Erfassung der Durchbruchspannung der Avalanche-Photodiode vorgesehen sind, und in Abhängigkeit der ermittelten Durchbruchspannung die Vorspannung der Avalanche-Photodiode zur Durchführung der Objekterfassung festgelegt wird, **dadurch gekennzeichnet, dass** zur Ermittlung der Durchbruchspannung der Avalanche-Photodiode deren Vorspannung fortlaufend erhöht wird, bis ein Durchbruch erfolgt, wobei durch in Reiheschalten eines Widerstandes mit der Avalanche-Photodiode verhindert wird, dass ein dauerhafter Durchbruch erfolgt, sondern nur kurze Stromimpulse generiert werden, und dass die Anzahl von Stromimpulsen innerhalb eines Zeitintervalls T1 als Maß für die Durchbruchspannung ausgewertet wird.

2. Verfahren nach Anspruch 1, **dadurch gekennzeichnet, dass** der aktuelle Wert der Vorspannung der Avalanche-Photodiode, für welchen vorgegebener Mindestwert an Stromimpulsen innerhalb eines Zeitintervalls T1 registriert wird, als Durchbruchspannung übernommen wird.

3. Verfahren nach einem der Ansprüche 1 oder 2, **dadurch gekennzeichnet, dass** auf ein Zeitintervall T1 zur Bestimmung der Durchbruchspannung wenigstens ein Zeitintervall T2 folgt, innerhalb deren Messungen zur Objektdetektion durchgeführt werden.

4. Verfahren nach Anspruch 3, **dadurch gekennzeichnet, dass** während des Betriebs des optischen Sensors (1) zyklisch auf ein Zeitintervall T1 zur Bestimmung der Durchbruchspannung ein Zeitintervall T2 zur Durchführung von Messungen zur Objektdetektion folgt.

5. Verfahren nach einem der Ansprüche 1 oder 2, **dadurch gekennzeichnet, dass** dieser einen Temperatursensor zur Bestimmung der Umgebungstemperatur der Avalanche-Photodiode aufweist, und dass nur bei einer mit dem Temperatursensor registrierten Temperaturänderung innerhalb von Zeitintervallen T1 Messungen zur Bestimmung der Durchbruchspannung durchgeführt werden.

6. Verfahren nach einem der Ansprüche 1 bis 5, **dadurch gekennzeichnet, dass** im optischen Sensor (1) ein Zusatz-Sender (11) als künstliche Fremdlichtquelle vorgesehen ist, wobei während der Zeitintervalle T1 mit dem Sender (3) generiertes Licht direkt in die Avalanche-Photodiode eingestrahlt wird.

7. Verfahren nach Anspruch 6, **dadurch gekennzeichnet, dass** durch die Fremdlichtquelle die in den Zeitintervallen T1 ermittelte Durchbruchspannung um einen Offset verschoben wird.

8. Verfahren nach Anspruch 7, **dadurch gekennzeichnet, dass** zur Bestimmung der Vorspannung der Avalanche-Photodiode für die Objekterfassung aus der ermittelten Durchbruchspannung der mit der Fremdlichtquelle generierte Offset und/oder ein von einem Parameterwert gebildeter Offset herangezogen wird.

9. Optischer Sensor (1) zur Erfassung von Objekten (6) in einem Überwachungsbereich, mit einem Sendelichtstrahlen (2) emittierenden Sender (3), einem Empfangslichtstrahlen empfangenden Empfänger (5) in Form einer Avalanche-Photodiode, und mit einer Auswerteeinheit (8), in welcher in Abhängigkeit von Empfangssignalen des Empfängers (5) ein Objektfeststellungssignal generierbar ist, wobei Mittel zur Erfassung der Durchbruchspannung der Avalanche-Photodiode vorgesehen sind, und in Abhängigkeit der ermittelten Durchbruchspannung die Vorspannung der Avalanche-Photodiode zur Durchführung der Objekterfassung festlegbar ist, dass mit den Mitteln zur Erfassung der Durchbruchspannung der Avalanche-Photodiode deren Vorspannung fortlaufend erhöht wird, bis ein Durchbruch erfolgt, wobei ein Widerstand mit der Avalanche-Photodiode in Reihe geschaltet ist, wodurch verhindert wird, dass ein dauerhafter Durchbruch erfolgt, sondern nur kurze Stromimpulse generiert werden, und dass die Anzahl von Stromimpulsen innerhalb eines Zeitintervalls T1 als Maß für die Durchbruchspannung ausgewertet wird.

10. Optischer Sensor nach Anspruch 9, **dadurch gekennzeichnet, dass** dieser einen Zusatz-Sender (11) aufweist, mittels dessen Licht direkt in die Avalanche-Photodiode einstrahlbar ist.

11. Optischer Sensor nach einem der Ansprüche 9 oder 10, **dadurch gekennzeichnet, dass** dieser einen Temperatursensor zur Messung der Umgebungstemperatur der Avalanche-Photodiode aufweist.

12. Optischer Sensor nach einem der Ansprüche 9 bis 11, **dadurch gekennzeichnet, dass** dieser ein Distanzsensor ist.

13. Optischer Sensor nach einem der Ansprüche 9 bis 12, **dadurch gekennzeichnet, dass** der Sender (3) von einer Laserdiode gebildet ist.

## Claims

1. Method of detecting objects (6) in a monitoring region by means of an optical sensor (1) comprising a transmitter (3) emitting transmitted light beams (2), a receiver (5), which receives received light beams (4), in the form of an avalanche photodiode, and an evaluating unit in which an object detection signal is generated in dependence on received signals of the receiver, wherein means for detecting the break-through voltage of the avalanche photodiode are provided and in dependence on the determined break-through voltage the bias voltage of the avalanche photodiode is determined for carrying out the object detection, **characterised in that** for determination of the break-through voltage of the avalanche photodiode the bias voltage thereof is continuously increased until a break-through takes place, wherein through series connection of a resistance with the avalanche photodiode a permanent break-through is prevented and only short current pulses are generated and that the number of current pulses within a time interval T1 is evaluated as a measure for the break-through voltage.

2. Method according to claim 1, **characterised in that** the instantaneous value of the bias voltage of the avalanche photodiode, for which a predetermined minimum value of current pulses within a time interval T1 is registered, is taken over as break-through voltage.

3. Method according to claims 1 or 2, **characterised in that** at least one time interval T2, within which the measurements thereof are carried out for object detection, follows a time interval T1 for determination of the break-through voltage.

4. Method according to claim 3, **characterised in that** during operation of the optical sensor (1) a time interval T2 for carrying out measurements for object detection cyclically follows a time interval T1 for determination of the break-through voltage.

5. Method according to one of claims 1 and 2, **characterised in that** this comprises a temperature sensor for determination of the ambient temperature of the avalanche photodiode and that measurements for determination of the break-through voltage are carried out only if a temperature change is registered by the temperature sensor within time intervals T1.

6. Method according to any one of claims 1 to 5, **characterised in that** an auxiliary transmitter (11) as an artificial extraneous light source is provided in the optical sensor (1), wherein during the time intervals T1 light generated by the transmitter (3) is radiated directly into the avalanche photodiode.

7. Method according to claim 6, **characterised in that** the break-through voltage determined in the time intervals T1 is shifted by an offset by the extraneous light source.

8. Method according to claim 7, **characterised in that** for determination of the bias voltage of the avalanche photodiode for object detection from the determined break-through voltage use is made of the offset generated by the extraneous light source and/or an offset formed by a parameter value.

9. Optical sensor (1) for detecting objects (6) in a monitoring region, with a transmitter (3) emitting transmitted light beams (2), a receiver (5), which receives received light beams, in the form of an avalanche photodiode, and an evaluating unit (8) in which an object detection signal can be generated in dependence on received signals of the receiver (5), wherein means for detecting the break-through voltage of the avalanche photodiode are provided, and in dependence on the determined break-through voltage the bias voltage of the avalanche photodiode can be determined for carrying out the object detection, wherein by the means for detection of the break-through voltage of the avalanche photodiode the bias voltage thereof is continuously increased until a break-through takes place, wherein a resistance is connected in series with the avalanche photodiode so that a permanent break-through is prevented and only short current pulses are generated, and wherein the number of current pulses within a time interval T1 is evaluated as a measure for the break-through voltage.

10. Optical sensor according to claim 9, **characterised in that** this comprises an auxiliary transmitter (11) by means of which light can be directly radiated into the avalanche photodiode.

11. Optical sensor according to one of claims 9 and 10, **characterised in that** this comprises a temperature sensor for measuring the ambient temperature of the avalanche photodiode.

12. Optical sensor according to any one of claims 9 to 11, **characterised in that** this is a distance sensor.

13. Optical sensor according to any one of claims 9 to 12, **characterised in that** the transmitter (3) is formed by a laser diode.

## Revendications

1. Procédé de détection d'objets (6) dans une zone de surveillance au moyen d'un capteur optique (1) comprenant un émetteur (3) émettant des rayons lumineux d'émission (2), un récepteur (5) recevant des rayons lumineux de réception (4) sous la forme d'une photodiode à avalanche, et une unité d'évaluation dans laquelle un signal de détection d'objet est généré en fonction de signaux de réception du récepteur, des moyens étant prévus pour détecter la tension de claquage de la photodiode à avalanche, et la tension de polarisation de la photodiode à avalanche pour effectuer la détection d'objets étant définie en fonction de la tension de claquage déterminée, **caractérisé en ce que** pour déterminer la tension de claquage de la photodiode à avalanche, sa tension de polarisation est augmentée de façon continue jusqu'à ce qu'un claquage se produise, le montage en série d'une résistance avec la photodiode à avalanche empêchant qu'un claquage durable se produise, seulement de courtes impulsions de courant étant au contraire générées, et que le nombre d'impulsions de courant dans un intervalle de temps T1 est évalué comme mesure de la tension de claquage.

2. Procédé selon la revendication 1, **caractérisé en ce que** la valeur actuelle de la tension de polarisation de la photodiode à avalanche, pour laquelle une valeur minimale prédéfinie d'impulsions de courant dans un intervalle de temps T1 est enregistrée, est prise comme tension de claquage.

3. Procédé selon l'une des revendications 1 ou 2, **caractérisé en ce qu'**un intervalle de temps T1 pour déterminer la tension de claquage est suivi d'au moins un intervalle de temps T2 pendant lequel des mesures de détection d'objets sont effectuées.

4. Procédé selon la revendication 3, **caractérisé en ce que** pendant le fonctionnement du capteur optique (1), cycliquement, un intervalle de temps T1 pour déterminer la tension de claquage est suivi d'un intervalle de temps T2 pour effectuer des mesures de détection d'objets.

5. Procédé selon l'une des revendications 1 ou 2, **caractérisé en ce que** celui-ci présente un capteur de température pour déterminer la température ambiante de la photodiode à avalanche, et que des mesures pour déterminer la tension de claquage ne sont effectuées que si une variation de température est enregistrée avec le capteur de température dans les intervalles de temps T1.

6. Procédé selon l'une des revendications 1 à 5, **caractérisé en ce qu'**un émetteur supplémentaire (11) est prévu comme source de lumière externe artificielle dans le capteur optique (1), la lumière générée par l'émetteur (3) étant émise directement dans la photodiode à avalanche pendant les intervalles de temps T1.

7. Procédé selon la revendication 6, **caractérisé en ce que** sous l'effet de la source de lumière externe, la tension de claquage déterminée dans les intervalles de temps T1 est décalée d'un offset.

8. Procédé selon la revendication 7, **caractérisé en ce que** l'offset généré avec la source de lumière externe et/ou un offset formé par une valeur de paramètre sont utilisés pour déterminer la tension de polarisation de la photodiode à avalanche pour la détection d'objets à partir de la tension de claquage déterminée.

9. Capteur optique (1) pour la détection d'objets (6) dans une zone de surveillance, comprenant un émetteur (3) émettant des rayons lumineux d'émission (2), un récepteur (5) recevant des rayons lumineux de réception sous la forme d'une photodiode à avalanche, et une unité d'évaluation (8) dans laquelle un signal de détection d'objet peut être généré en fonction de signaux de réception du récepteur (5), des moyens étant prévus pour détecter la tension de claquage de la photodiode à avalanche, et la tension de polarisation de la photodiode à avalanche pour effectuer la détection d'objets pouvant être définie en fonction de la tension de claquage déterminée, **caractérisé en ce qu'**avec les moyens de détection de la tension de claquage de la photodiode à avalanche, la tension de polarisation de celle-ci est augmentée de façon continue jusqu'à ce qu'un claquage se produise, une résistance étant montée en série avec la photodiode à avalanche, empêchant ainsi qu'un claquage durable se produise, seulement de courtes impulsions de courant étant au contraire générées, et que le nombre d'impulsions de courant dans un intervalle de temps T1 est évalué comme mesure de la tension de claquage.

10. Capteur optique selon la revendication 9, **caractérisé en ce que** celui-ci présente un émetteur supplémentaire (11) au moyen duquel de la lumière peut être émise directement dans la photodiode à avalanche.

11. Capteur optique selon l'une des revendications 9 ou 10, **caractérisé en ce que** celui-ci présente un capteur de température pour mesurer la température ambiante de la photodiode à avalanche.

12. Capteur optique selon l'une des revendications 9 à 11, **caractérisé en ce que** celui-ci est un capteur de distance.

13. Capteur optique selon l'une des revendications 9 à 12, **caractérisé en ce que** l'émetteur (3) est formé par une diode laser.
